# EUROPEAN PATENT APPLICATION

(11) **EP 4 692 781 A1**
(43) Date of publication of application: **11.02.2026**
(21) Application number: 24779855.6
(22) Date of filing: 21.03.2024
(51) Int. Cl.: G01N 29/265, B25J 13/08

(54) **CONTROL DEVICE OF FLAW DETECTION DEVICE AND QUALITY MANAGEMENT SUPPORT METHOD**

(30) Priority: 31.03.2023 JP 2023056993
(71) Applicant: Mitsubishi Heavy Industries, Ltd., Tokyo 100-8332 (JP)
(72) Inventor: MATSUMOTO, Takayuki, Tokyo 100-8332 (JP); ISHIDA, Makoto, Tokyo 100-8332 (JP)
(74) Representative: Hoffmann Eitle
(86) International application number: PCT/JP2024/011068
(87) International publication number: WO 2024/203735

(57) **Abstract**

A control device (40) of a flaw detection device uses, as a control target, a flaw detection device provided with a probe (28a) and a robot arm (26) that presses the probe against an inspection object. The control device executes tracing processing, learning processing, and inspection processing. In the tracing processing, the probe is moved along the inspection object while being brought into contact with the inspection object by operating the robot arm. In the learning processing, the shape of the inspection object is learned according to the position of the probe for every movement thereof in the tracing processing. **In** the inspection processing, the inspection object is inspected by using the reflected wave of the ultrasonic wave transmitted while displacing the probe brought into contact with the inspection object according to the shape of the inspection object learned by the learning processing.

## Description

### Technical Field

The present disclosure relates to a control device of a flaw detection device and a quality management support method.

### Background Art

For example, PTL 1 below discloses a robot arm that grips an ultrasonic sensor.

### Citation List

### Patent Literature

[PTL 1] Japanese Patent No. 5495562

### Summary of Invention

### Technical Problem

Incidentally, in order to accurately perform an inspection using the ultrasonic sensor (probe), it is desirable to displace the probe while appropriately bringing the probe into contact with an inspection target. However, when an exact position of the inspection target cannot be recognized, it is difficult to displace the probe while appropriately bringing the probe into contact with the inspection target.

### Solution to Problem

According to one aspect of the present disclosure, there is provided a control device of a flaw detection device. In the control device of the flaw detection device, a control target is a flaw detection device including a probe and a robot arm that presses the probe against an inspection target. The control device of the flaw detection device is configured to execute tracing processing, learning processing, and inspection processing. The tracing processing is processing for moving the probe along the inspection target while bringing the probe into contact with the inspection target by operating the robot arm. The learning processing is processing for learning a shape of the inspection target in accordance with a position of the probe each time the probe is moved by the tracing processing. The inspection processing is processing for inspecting the inspection target by using a reflected wave of a transmitted ultrasonic wave while displacing the probe brought into contact with the inspection target in accordance with the shape of the inspection target which is learned by the learning processing.

5. According to another aspect of the present disclosure, there is provided a control device of a flaw detection device. In the control device of the flaw detection device, a control target is a flaw detection device including a probe and a robot arm that presses the probe against an inspection target. The control device of the flaw detection device is configured to execute displacement processing, three-dimensional data getting processing, and adjustment processing. The displacement processing is processing for displacing the probe along the inspection target while bringing the probe into contact with the inspection target in accordance with robot path data. The robot path data is data that defines a robot path for displacing the probe along the inspection target while bringing the probe into contact with the inspection target in a predetermined coordinate system. The three-dimensional data getting processing is processing for getting data indicating information on a position and an angle which relate to the inspection target corresponding to an image of the inspection target. The adjustment processing includes alignment processing for aligning the predetermined coordinate system with the inspection target by using the information on the position and the angle as an input. The robot path data that is an input of the displacement processing is the robot path data in which the predetermined coordinate system is aligned with the inspection target by the adjustment processing.

According to still another aspect of the present disclosure, there is provided a quality management support method. The quality management support method includes a step of storing the shape learning data relating to a plurality of the inspection targets which is generated by the learning processing executed by the control device of the flaw detection device, and a step of feeding back the shape learning data relating to the plurality of stored inspection targets to a manufacturing step of the inspection targets. **In** the control device of the flaw detection device, a control target is a flaw detection device including a probe and a robot arm that presses the probe against an inspection target. The control device of the flaw detection device is configured to execute displacement processing, three-dimensional data getting processing, adjustment processing, and learning processing. The displacement processing is processing for displacing the probe along the inspection target while bringing the probe into contact with the inspection target in accordance with robot path data. The robot path data is data that defines a robot path for displacing the probe along the inspection target while bringing the probe into contact with the inspection target in a predetermined coordinate system. The three-dimensional data getting processing is processing for getting data indicating information on a position and an angle which relate to the inspection target corresponding to an image of the inspection target. The adjustment processing includes alignment processing for aligning the predetermined coordinate system with the inspection target by using the information on the position and the angle as an input. The robot path data that is an input of the displacement processing is the robot path data in which the predetermined coordinate system is aligned with the inspection target by the adjustment processing. The learning processing is processing for generating shape learning data by learning the shape of the inspection target. The shape learning data is data indicating coordinates of a surface of the inspection target which relate to a teaching point assigned to each of a plurality of positions of the inspection target and a direction orthogonal to the surface.

### Brief Description of Drawings

Fig. 1 is a view showing a configuration of a flaw detection system according to an embodiment.
Fig. 2 is a perspective view showing a configuration of a probe according to the embodiment.
Fig. 3 is a flowchart showing a procedure of processing executed by the flaw detection system according to the embodiment.
Fig. 4 is a flowchart showing a procedure of processing executed by a control device according to the embodiment.
Fig. 5 is a perspective view for describing adjustment processing according to the embodiment.
Fig. 6 is a flowchart showing a procedure of processing executed by the flaw detection system according to the embodiment.
Fig. 7 is a view showing shape learning data according to the embodiment.
Fig. 8 is a flowchart showing a procedure of processing executed by the control device according to the embodiment.
Fig. 9A is a view showing provisional robot path data according to the embodiment.
Fig. 9B is a view showing an example of an inspection target according to the embodiment.
Fig. 9C is a view showing an example of a sampling point according to the embodiment.
Fig. 9D is a view showing an example of a teaching point of the shape learning data according to the embodiment.
Fig. 10 is a view for describing processing for aligning a coordinate system according to the embodiment.
Fig. 11 is a view for describing processing for aligning the coordinate system according to the embodiment.
Fig. 12 is a view for describing processing for aligning the coordinate system according to the embodiment.
Fig. 13 is a flowchart that summarizes a procedure of the processing for aligning the coordinate system.

### Description of Embodiments

Hereinafter, an embodiment will be described with reference to the drawings.

### "System Configuration"

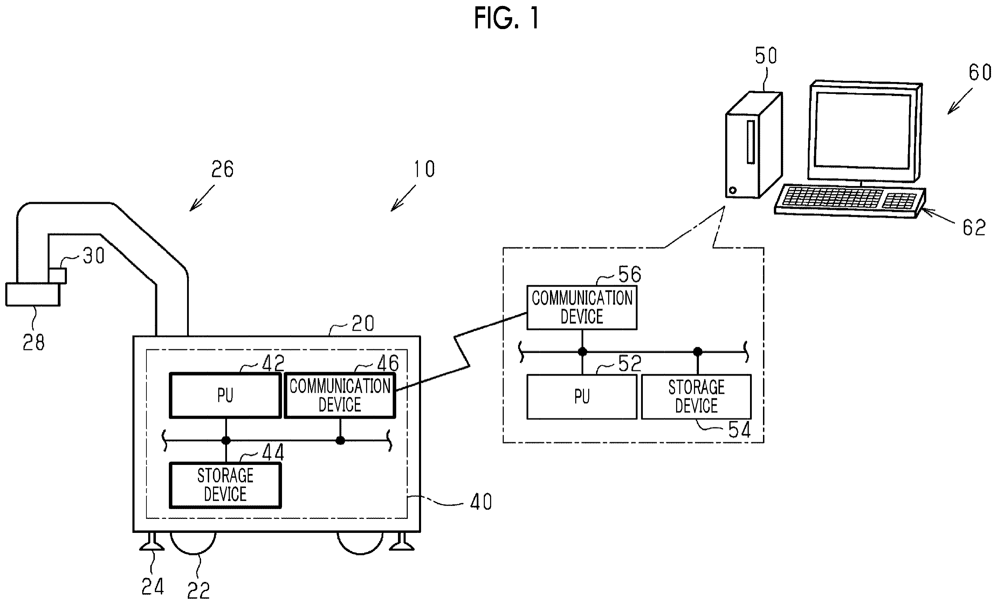

Fig. 1 shows a configuration of a flaw detection system.

A flaw detection system is a system that inspects an inspection target in accordance with a reflected wave of an ultrasonic wave transmitted from a probe while pressing the probe against the inspection target. The inspection of the inspection target aims to determine whether or not there is an internal abnormality. Specifically, when the inspection target is a composite material, the inspection of the inspection target may be inspecting whether or not there is separation, non-adhesion, an air bubble, or a foreign substance inside the composite material.

The flaw detection system includes a flaw detection device 10. The flaw detection device 10 includes a robot arm 26 provided in a bogie 20, an end effector 28, and a camera 30. The bogie 20 includes wheels 22. In addition, the bogie 20 is provided with a stopper 24. Therefore, after the bogie is moved to a predetermined position, the bogie 20 can be fixed not to move.

A control device 40 is provided in the bogie 20. A control target of the control device 40 is the flaw detection device 10. The control device 40 includes a PU 42, a storage device 44, and a communication device 46. The PU 42 is a software processing device including at least one of a CPU, a GPU, a TPU, and the like. The control device 40 controls the control target by causing the PU 42 to execute a program stored in the storage device 44.

The communication device 46 can communicate with a communication device 56 of an external terminal 50. The terminal 50 may be disposed at a position separated from the inspection target. The terminal 50 includes a PU 52, a storage device 54, and a communication device 56. The terminal 50 operates a display device 60 as a user interface. In addition, the terminal 50 receives an input from an input device 62 as the user interface.

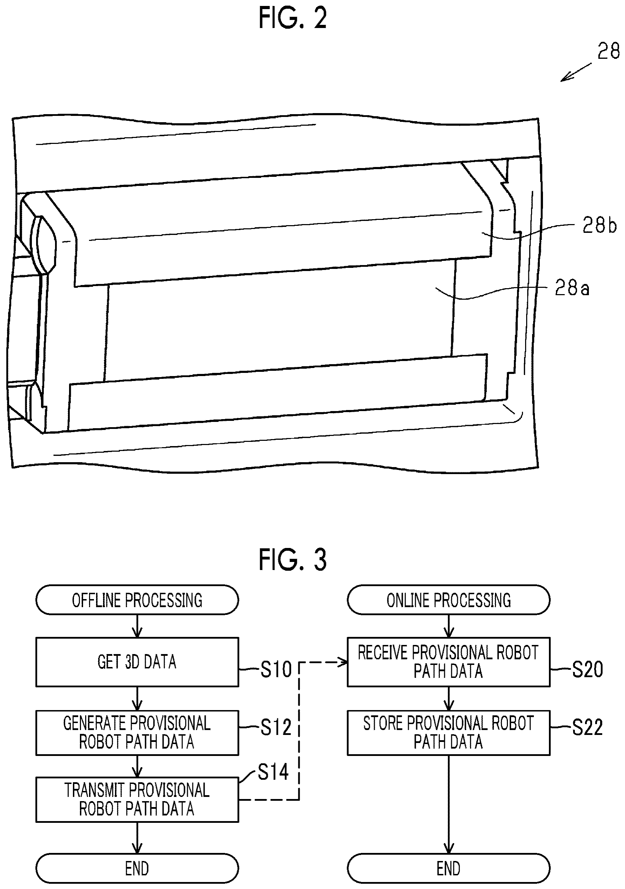

Fig. 2 shows the end effector 28. The end effector 28 includes a frame body 28b for gripping the probe 28a. The probe 28a includes a member that transmits the ultrasonic wave and a member that detects a reflected wave of the transmitted ultrasonic wave. In addition, the probe 28a may additionally include a protective film or the like.

### "Preprocessing"

Fig. 3 shows a procedure of preprocessing for inspecting the inspection target. In the processing shown in Fig. 3, offline processing is realized by causing the PU 52 to execute a program stored in the storage device 54 of the terminal 50, for example, when a predetermined condition is satisfied. In addition, online processing in the processing shown in Fig. 3 is realized by causing the PU 42 to execute a program stored in the storage device 44 of the control device 40, for example, when a predetermined condition is satisfied. Hereinafter, a step number of each processing is expressed by a number with a prefix "S".

In a series of processing shown in Fig. 3, the PU 52 of the terminal 50 first gets three-dimensional data of the inspection target (S10). The three-dimensional data includes data indicating a shape and a dimension of a surface of the inspection target. The three-dimensional data is created in accordance with specifications of the inspection target. Next, the PU 52 uses the three-dimensional data to generate data that defines a provisional robot path which is a robot path of the inspection target traced by the probe 28a (S12). That is, the PU 52 sets the provisional robot path by setting a predetermined robot path on the surface of the inspection target indicated by the three-dimensional data.

Specifically, the PU 52 sets a reference coordinate system in which a predetermined position UF is set as an origin. The predetermined position UF is a position that can be set in any desired way by a user. The PU 52 sets the provisional robot path in the reference coordinate system. Specifically, the PU 52 sets a plurality of positions on a robot path of the inspection target traced by the probe 28a. In this manner, the PU 52 defines the provisional robot path to connect the positions to each other. The PU 52 sets the provisional robot path, and sets representative points P1 to P3 and a confirmation point Pr in the inspection target. All of the representative points P1 to P3 and the confirmation point Pr specify a position of a predetermined object of the inspection target. The PU 52 associates a data portion for specifying the representative points P1 to P3 and the confirmation point Pr from the three-dimensional data with the representative points P1 to P3 and the confirmation point Pr, as data for pattern matching. In this manner, the PU 52 generates data relating to the representative points P1 to P3 and the confirmation point Pr. That is, the data relating to the representative points P1 to P3 and the confirmation point Pr includes data that defines positions and orientations of the representative points P1 to P3 and the confirmation point Pr, and the data for pattern matching.

In the present embodiment, as an example, the PU 52 sets the reference coordinate system while simulating the robot arm 26 and the inspection target on a virtual space. That is, the PU 52 sets the reference coordinate system while simulating the inspection target imaged by the camera 30. Through this processing, an object corresponding to the representative points P1 to P3 and the confirmation point PR which are imaged by the camera 30 is recognized. In addition, a vector Vn that proceeds from the representative point P1 to the predetermined position UF is recognized as a nominal vector.

The PU 52 transmits the provisional robot path data to the control device 40 together with data that defines the representative points P1 to P3 and the confirmation point Pr by operating the communication device 56 (S14). When the processing in S14 is completed, the PU 52 temporarily completes the offline processing shown in Fig. 3.

In contrast, the PU 42 of the control device 40 receives the provisional robot path data or the like (S20). The PU 42 stores the provisional robot path data or the like in the storage device 44 (S22). When the processing in S22 is completed, the PU 42 temporarily completes the online processing shown in Fig. 3.

### "Adjustment of Coordinate System"

In order to trace the inspection target with the probe 28a in accordance with the provisional robot path data, it is necessary to align a coordinate system (hereinafter, a robot coordinate system) used for displacing the robot arm 26 and a reference coordinate system for determining the provisional robot path data with the inspection target. Next, this configuration will be described.

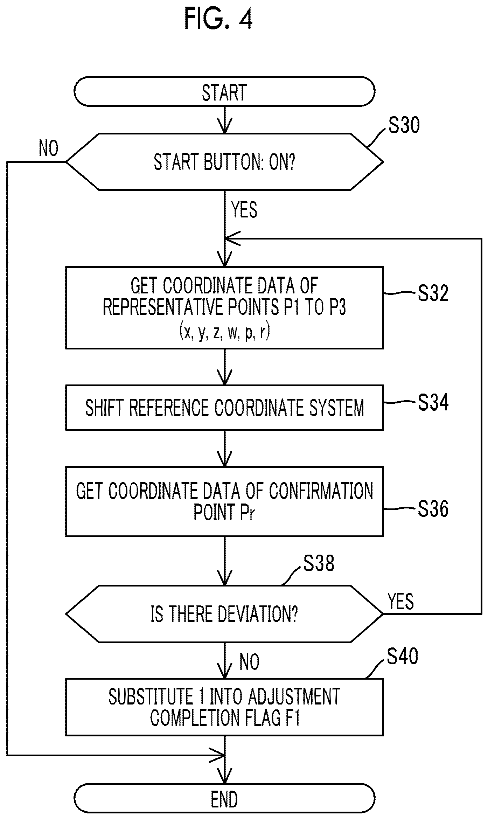

Fig. 4 shows a procedure of processing for adjusting the coordinate system. The processing shown in Fig. 4 is realized by causing the PU 42 to execute a program stored in the storage device 44, for example, when a predetermined condition is satisfied.

In a series of processing shown in Fig. 4, the PU 42 first determines whether or not a start button is switched to ON (S30). The start button is an interface for issuing a command to start the adjustment processing of the coordinate system. As an example, the start button may be pressed down by an operator after the bogie 20 is disposed in the vicinity of the inspection target. For example, the start button may be provided in the bogie 20.

When the PU 42 determines that the start button is switched to ON (S30: YES), the PU 42 gets coordinate data of the representative points P1 to P3 corresponding to a three-dimensional image of the inspection target imaged by the camera 30 (S32). Specifically, the PU 42 gets the coordinate data of the representative points P1 to P3 by performing pattern matching between the predetermined object corresponding to the representative points P1 to P3 and the three-dimensional image. Each of the coordinate data of the representative points P1 to P3 includes data that defines position coordinates in the robot coordinate system. Specifically, the coordinate data includes data that defines x components, y components, and z components, which are components of three coordinate axes orthogonal to each other. In addition, the coordinate data includes data that defines (w, p, and r) indicating a rotation angle of each of three axes of an x-axis, a y-axis, and a z-axis in accordance with an orientation of the predetermined object corresponding to each of the representative points P1 to P3. That is, for example, when the predetermined object is a screw hole, an axial direction of the screw hole is specified by (w, p, and r) indicating each rotation angle of three axes of the x-axis, the y-axis, and the z-axis.

The coordinate data of the representative points P1 to P3 gotten in this way is generally deviated from the data received by the PU 42 through the processing in S20.

Therefore, the PU 42 shifts the reference coordinate system to align the coordinate data of the representative points P1 to P3 gotten by the processing in S32 (S34). Here, a positional relationship between each of the representative points P1 to P3 and the predetermined position UF is a known relationship defined by the data generated in the processing in S12. Therefore, the PU 42 can calculate a vector from the origin of the robot coordinate system to the predetermined position UF by using the representative points P1 to P3. Here, in principle, the predetermined position UF can be specified by using the coordinate data of any one of the representative points P1 to P3. However, in the present embodiment, the PU 42 calculates the final predetermined position UF by performing averaging processing on the predetermined position UF determined from each of the representative points P1 to P3.

Specifically, the PU 42 first generates the coordinate data of the representative point P1 by merging the coordinate data of the representative points P1 to P3 gotten by the processing in S32. For example, this processing can be realized by determining a point defined by using the representative points P1 to P3. That is, for example, when a point defined here is set as a center of gravity, the coordinate data of the center of gravity is calculated by using the representative points P1 to P3. On the other hand, since the vector that proceeds from the defined point to the representative point P1 is known, a point obtained by shifting the defined point by the vector is regarded as the representative point P1. The coordinate data of the representative point P1 updated in this way is a point obtained by merging the coordinate data of the representative points P1 to P3. As described above, the vector Vn that proceeds from the representative point P1 to the predetermined position UF is known. Therefore, the PU 42 shifts the predetermined position UF to a point obtained by shifting the updated representative point P1 by the vector Vn. Actually, this processing is not an operation of a three-dimensional vector, and is an operation with reference to a rotation angle of each of the representative points P1 to P3.

The provisional robot path itself is shifted in the inspection target by shifting the predetermined position UF. In this manner, the provisional robot path can be determined as an intended robot path in the actual inspection target.

Next, the PU 42 gets the coordinate data of the confirmation point Pr in the inspection target, which corresponds to the three-dimensional image of the inspection target imaged by the camera 30 (S36). The confirmation point Pr is a point different from the representative points P1 to P3. The coordinate data of the confirmation point Pr is data that defines position coordinates in the reference coordinate system shifted by the processing in S34.

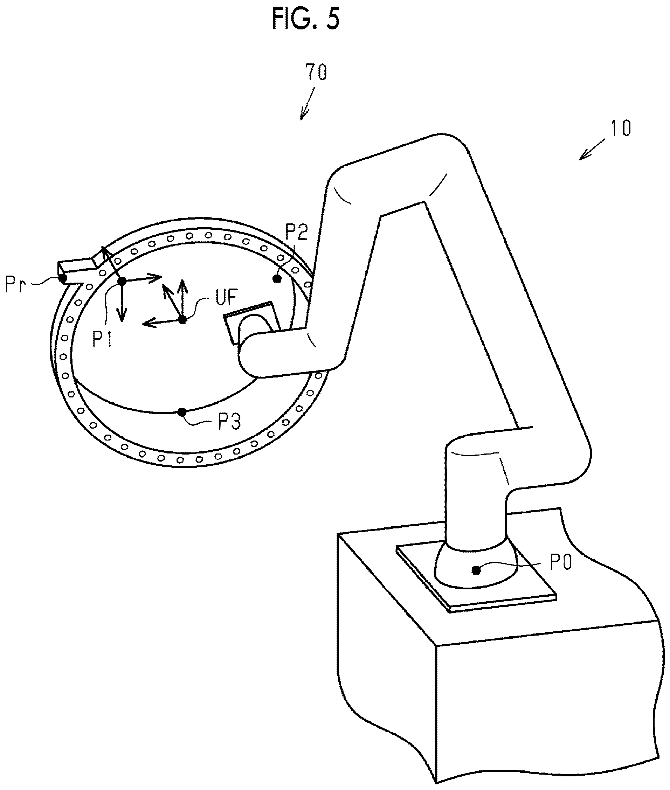

Fig. 5 shows an example of the representative points P1 to P3 and the confirmation point Pr in the inspection target. An origin P0 of the robot coordinate system is also shown in Fig. 5.

Referring back to Fig. 4, the PU 42 determines whether or not the gotten coordinate data of the confirmation point Pr is deviated from the coordinate data determined by the three-dimensional data handled in the processing in S10 (S38). When it is determined that there is a deviation (S38: YES), the PU 42 returns to the processing in S32 to execute retry processing for resetting the reference coordinate system.

On the other hand, when it is determined that there is no deviation (S38: NO), the PU 42 substitutes "1" into an adjustment completion flag F1 (S40).

When the processing in S40 is completed and when a negative determination is made in the processing in S30, the PU 42 temporarily completes the series of processing shown in Fig. 4.

### "Shape Learning of Inspection Target"

The three-dimensional data handled in the processing in S10 does not reflect a tolerance of the inspection target. Therefore, when the probe 28a is displaced in accordance with the provisional robot path data, there is a possibility that the probe 28a cannot be pressed with an optimal pressing force at an optimal position for the inspection of the inspection target. Therefore, the PU 52 learns a shape of the inspection target before inspecting the inspection target.

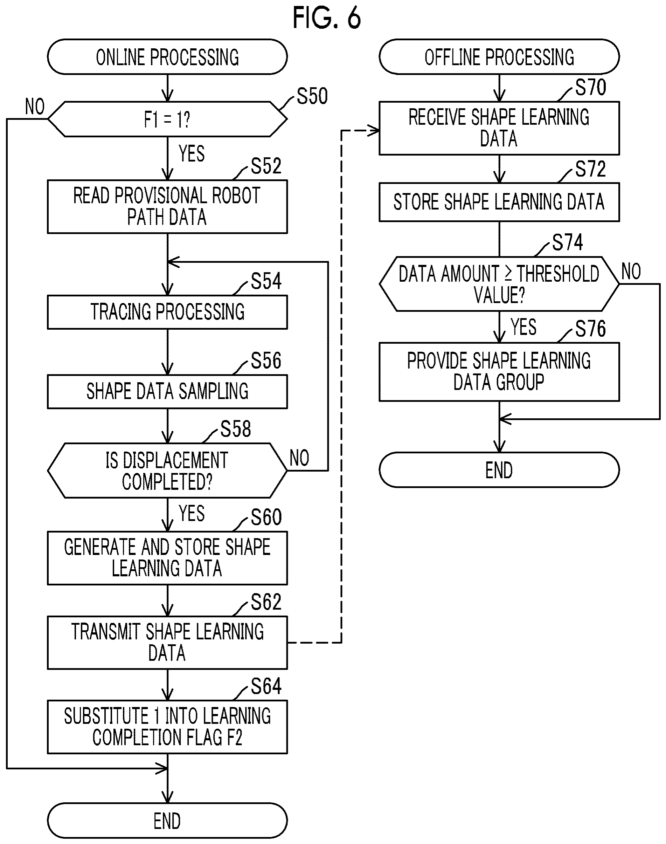

Fig. 6 shows a procedure of processing relating to the learning. The online processing shown in Fig. 6 is realized by causing the PU 42 to execute a program stored in the storage device 44 of the control device 40, for example, when a predetermined condition is satisfied. In addition, the offline processing shown in Fig. 6 is realized by causing the PU 52 to execute a program stored in the storage device 54 of the terminal 50, for example, when a predetermined condition is satisfied.

In a series of processing shown in Fig. 6, the PU 42 first determines whether or not the adjustment completion flag F1 is "1" (S50). When it is determined that the adjustment completion flag F1 is "1" (S50: YES), the PU 42 reads the provisional robot path data stored in the storage device 44 in the processing in S22 (S52). The PU 42 displaces the probe 28a while bringing the probe 28a into contact with the inspection target in accordance with the robot path indicated by the provisional robot path data (S54). In other words, the PU 42 traces a shape of a predetermined location of the inspection target with the probe 28a. Here, the PU 42 detects a reaction from the inspection target by using a detection value of a force sensor provided in the robot arm 26 as an input. In this manner, the PU 42 detects a surface position of the inspection target.

The PU 42 samples shape data of the inspection target as the probe 28a is displaced (S56). The shape data is data for specifying the position coordinates of the surface of the inspection target and a direction orthogonal to the surface of the inspection target. The PU 42 continues the processing in S54 and S56 until the probe 28a traces the whole robot path according to the provisional robot path data (S58: NO).

When the probe 28a traces the whole robot path according to the provisional robot path data (S58: YES), the PU 42 stores the shape learning data corresponding to the data sampled by the processing in S56 in the storage device 44 (S60). The shape learning data is data that specifies the coordinates of the position of the surface of the inspection target and the direction orthogonal to the surface, which relate to a teaching point assigned to each of a plurality of positions of the inspection target. The PU 42 uses at least a portion of the sampled data as the shape learning data.

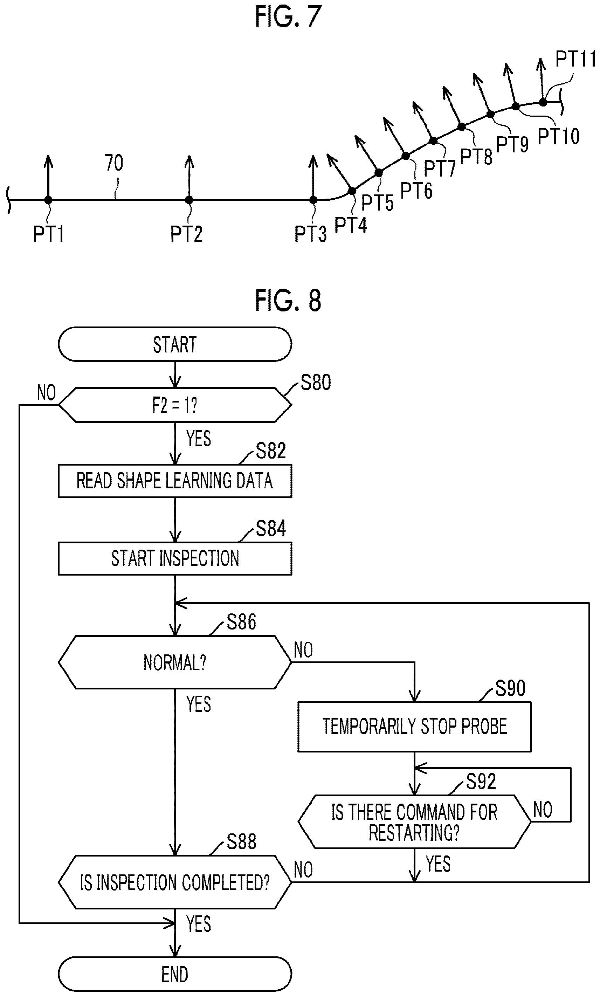

Fig. 7 shows an example of the teaching point defined by the shape learning data. Fig. 7 shows teaching points PT1 to PT11. In Fig. 7, a direction orthogonal to the surface of the inspection target 70 at the teaching points PT1 to PT11 is expressed by a vector having a unit length. As shown in Fig. 7, the PU 42 changes an interval between the teaching points in accordance with a curvature under a condition that the interval between the teaching points in a region having a larger curvature of the surface of the inspection target 70 is equal to or smaller than the interval between the teaching points in a region having a smaller curvature. That is, the teaching points PT1 and PT2 are located at positions where the surface of the inspection target 70 is flat. Therefore, the interval is large. On the other hand, the teaching points PT4 to PT11 are located at positions where the curvature of the surface of the inspection target 70 is large. Therefore, the interval between the teaching points PT4 to PT11 adjacent to each other is small.

Referring back to Fig. 6, the PU 52 transmits the shape learning data to the terminal 50 by operating the communication device 46 (S62). The PU 42 substitutes "1" into a learning completion flag F2 (S64). The PU 42 temporarily completes the online processing shown in Fig. 6 when the processing in S64 is completed and when negative determination is made in the processing in S50.

On the other hand, the PU 52 of the terminal 50 receives the shape learning data (S70). The PU 52 stores the shape learning data in the storage device 54 (S72). The PU 52 determines whether or not a data amount stored in the storage device 54 in the processing in S72 is equal to or greater than a threshold value (S74). The threshold value is set to the data amount of a sufficient number of the shape learning data to evaluate a manufacturing step of mass-produced inspection targets. When it is determined that the data amount is equal to or greater than the threshold value (S74: YES), the PU 52 provides a shape learning data group stored in the storage device 54 to the manufacturing step of the inspection targets (S76). This processing may be processing for transmitting the shape learning data group to a terminal to which a person involved in the manufacturing step accesses. In this manner, it is possible to evaluate a tolerance or the like in the manufacturing step of the inspection targets in a manufacturing site.

The PU 52 temporarily completes the offline processing shown in Fig. 6, when the processing in S76 is completed and when negative determination is made in the processing in S74

### "Inspection of Inspection Target"

Fig. 8 shows a procedure of processing relating to the inspection of the inspection target. The processing shown in Fig. 8 is realized by causing the PU 42 to execute a program stored in the storage device 44, for example, when a predetermined condition is satisfied.

In a series of processing shown in Fig. 8, the PU 42 first determines whether or not the learning completion flag F2 is "1" (S80). When it is determined that the learning completion flag F2 is "1" (S80: YES), the PU 82 reads the shape learning data stored by the processing in S60 (S82). The PU 82 starts the inspection of the inspection target (S84). That is, the PU 82 displaces the probe 28a while bringing the probe 28a into contact with the surface of the inspection target in accordance with the shape learning data. In this case, the PU 42 presses the probe 28a against the inspection target such that a force is perpendicularly applied to the surface of the inspection target. For example, in an example shown in Fig. 7, the PU 42 applies a force to the probe 28a in a direction opposite to a direction of a unit vector. The PU 42 displaces the probe 28a to sequentially trace the teaching points PT1 to PT11 to the teaching points PT1 to PT11. In this case, the PU 42 causes the probe 28a to transmit the ultrasonic wave, and gets a reflected wave of the ultrasonic wave received by the probe 28a.

The PU 42 determines whether or not a currently inspected position of the inspection target is normal by using the received reflected wave as an input (S86). When it is determined that the inspection target is normal (S86: YES), the PU 42 determines whether or not the inspection is completed (S88). The PU 82 determines that the inspection is completed when the probe 28a traces all robot paths defined by the shape learning data. When it is determined that the inspection is not yet completed (S88: NO), the PU 42 returns to the processing in S86.

On the other hand, when it is determined that there is an abnormality in the inspection target (S86: NO), the PU 42 temporarily stops the displacement of the probe 28a (S90). In this case, the PU 42 issues a notification that the abnormality is detected. The PU 42 determines whether or not there is a command for restarting (S92). The command for restarting is issued by an operator. The operator confirms a situation in response to the notification that the abnormality occurs. When it is determined that it is appropriate to continue the inspection by the flaw detection device 10, the operator issues the command for restarting.

When the command for restarting is issued (S92: YES), PU 42 returns to the processing in S86.

When positive determination is made in the processing in S88 and when negative determination is made in the processing in S80, the PU 42 temporarily completes a series of processing shown in Fig. 8.

### "Operation and Advantageous Effect of Present Embodiment"

The PU 42 receives the provisional robot path data from the terminal 50. The provisional robot path data is a provisional robot path defined on the surface of the inspection target in accordance with the three-dimensional data defined by the specifications of the inspection target.

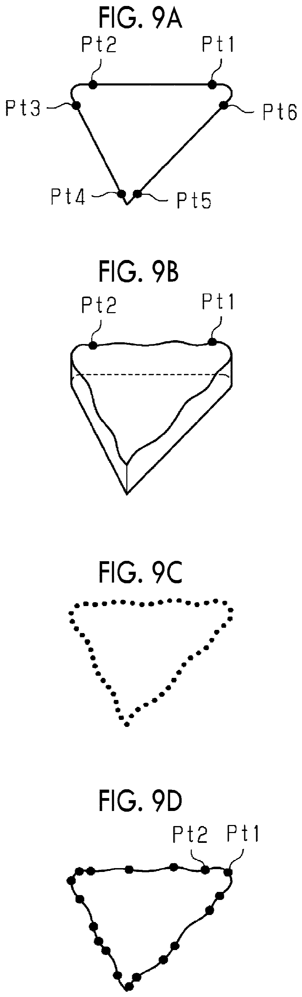

Fig. 9A shows the provisional robot path data. Fig. 9A shows an example of the provisional robot path connecting the teaching points Pt1 to Pt7.

In this manner, the PU 42 learns an actual surface shape of the inspection target while displacing the probe 28a to sequentially trace the teaching points Pt1 to Pt7 of the inspection target.

Fig. 9B shows the surface shape of the inspection target connecting the teaching points Pt1 to Pt6. As shown in Fig. 9B, due to the tolerance, the actual surface shape of the inspection target is deviated from the surface shape defined by the three-dimensional data.

The PU 42 displaces the probe 28a while bringing the probe 28a into contact with the inspection target by the processing in S54. In this case, the PU 42 detects the coordinates of the inspection target in contact with the probe 28a and the direction orthogonal to the surface of the inspection target through the control of the robot arm 26. The PU 42 sequentially stores the detected coordinates and direction.

Fig. 9C shows an example of a sampling point for storing the coordinates and the direction.

When the processing in S54 is completed, the PU 42 generates shape learning data by using the sampled data.

Fig. 9D shows an example of the teaching point of the shape learning data. The shape learning data defines a robot path through which the probe 28a passes during the inspection by connecting the teaching points PT1, PT2, and so on. In addition, the shape learning data specifies a direction perpendicular to the surface of the inspection target at each teaching point.

Since the shape learning data is used, the PU 42 can press the probe 28a against the inspection target while perpendicularly applying a force to the surface of the inspection target. Therefore, the inspection can be accurately performed by using the probe 28a.

In addition, the provisional robot path data or the like is generated in such a manner that the PU 52 of the terminal 50 simulates the inspection target as viewed from the camera 30.

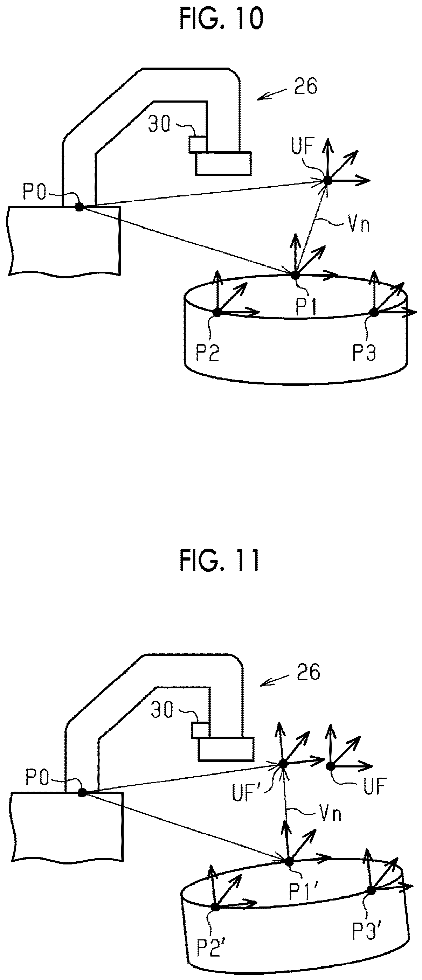

As shown in Fig. 10, through the simulation, the PU 52 determines the positions of the representative points P1 to P3 on the inspection target in the robot coordinate system. Specifically, this configuration is realized by the PU 52 calculating a sum of a vector that proceeds from the camera 30 to the representative points P1 to P3 and a vector that proceeds from the origin P0 of the robot coordinate system to the origin of the coordinate system as viewed from the camera 30. The PU 52 sets a vector that proceeds from the representative point P1 to the predetermined position UF as a nominal vector Vn.

Subsequently, the PU 42 of the control device 40 gets the coordinate data of the representative points P1 to P3 in the robot coordinate system from the actual image of the camera 30 as shown in Fig. 11. In Fig. 11, the representative points P1 to P3 in the actual image of the cameras 30 are described as representative points P1', P2', and P3'. In addition, Fig. 11 shows an actual predetermined position UF' corresponding thereto. This position is deviated from the predetermined position UF in Fig. 10.

The PU 42 sets a new representative point P1' by merging information on the representative points P1 to P3. The predetermined position UF' which needs to be obtained is calculated by performing composite calculation between the vector directed to the new representative point P1' and the known vector Vn. Since the predetermined position UF is shifted to the predetermined position UF', a plurality of the teaching points on the reference coordinate system in which the predetermined position UF is set as the origin are simultaneously shifted to the teaching points on the reference coordinate system in which the predetermined position UF' is set as the origin.

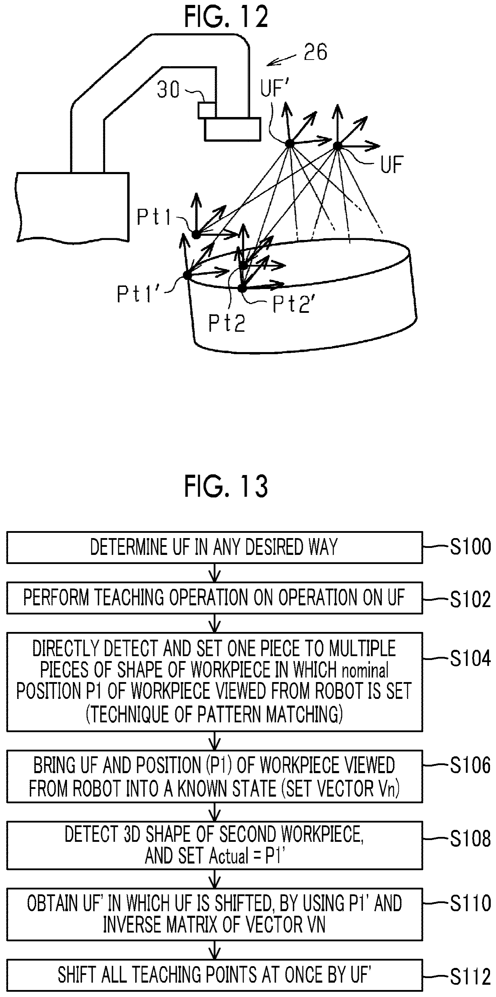

Therefore, as shown in Fig. 12, the teaching points Pt1, Pt2, and so on are changed to correct positions in the inspection target.

Fig. 13 summarizes a procedure of the processing in Figs. 10 to 12.

As the processing shown in Fig. 10, first, the reference coordinate system in which the predetermined position UF is set as the origin is determined in any desired way (S100). Next, a teaching operation relating to the displacement of the probe 28a is performed by setting the provisional robot path data (S102). Next, the representative point P1 of the inspection target (workpiece) in the robot coordinate system is set (S104). In this manner, the nominal vector Vn that proceeds from the representative point P1 to the predetermined position UF is defined (S106).

Thereafter, as shown in Fig. 11, the representative point P1' of the inspection target is set from the actual image of the camera 30 (S108). Here, the representative point P1' is obtained by merging the information on the representative points P1' to P3'. The processing shown in Fig. 11 is processing in which the representative point P1' is set by calculation from three points after the representative points P1', P2', and P3' at positions and postures of the actual inspection target (second and subsequent inspection target) are detected.

As shown in Fig. 12, the predetermined position UF' is obtained by using the merged representative point P1' and an inverse matrix of the known vector Vn (S110). In this manner, since the teaching point is defined in the reference coordinate system in which the predetermined position UF' is set as the origin, all of the teaching points are shifted at once (S112). The inverse matrix has a component indicating a rotation angle.

According to the present embodiment described above, the following operational effects can be achieved.
(1) The PU 42 performs the processing in S34 as processing for shifting the representative point P1 corresponding to one object of the inspection target by the vector Vn. In this manner, the predetermined position UF can be easily shifted even when the number of the representative points is one or even when the number of the representative points is any plurality of points.

### <Correspondence Relationship>

A correspondence relationship between the items in the above-described embodiment and the items described in the following "Additional Notes" is as follows. Hereinafter, the correspondence relationship is shown for each number of solutions described in the "Additional Notes".

[1] The control device corresponds to the control device 40. The tracing processing corresponds to the processing in S54. The learning processing corresponds to the processing in S56 and S60. The inspection processing corresponds to the processing S84 to S88.

[2, 3] The shape learning data corresponds to the data shown in Fig. 7.

[4, 6] The three-dimensional data getting processing corresponds to the processing in S32. The adjustment processing corresponds to the processing in S34 to S38. The alignment processing corresponds to the processing in S34.

[5, 6] The displacement processing corresponds to the processing in S54. The three-dimensional data getting processing corresponds to the processing in S32. The adjustment processing corresponds to the processing in S34 to S38. The alignment processing corresponds to the processing in S34.

[7] The representative point for merging corresponds to the representative point P1.

[8] The getting processing for confirmation corresponds to the processing in S36. The determination processing corresponds to the processing in S38. The retry processing corresponds to the processing executed when the positive determination is made in the processing in S38.

[9] The step of storing the learning data corresponds to the step of executing the processing in S72. The feedback step corresponds to the step of executing the processing in S76.

### <Other Embodiments>

The present embodiment can be modified and implemented as follows. The present embodiment and the following modification examples can be implemented in combination with each other within a range in which the present embodiment and the following modification examples are not technically contradictory.

### "Regarding Tracing Processing"

· Fig. 6 shows an example in which the processing in S54 is executed by using the positive determination in the processing in S50 as a trigger. However, the present disclosure is not limited thereto. For example, the processing in S54 may be executed when a logical product is true in a case where the positive determination is made in the processing in S50 and in a case where the command for executing the tracing processing is input.
· It is not essential to include a condition that the positive determination is made in the processing in S50 in a condition of executing the processing in S54. In other words, it is not essential that the tracing processing is performed after the adjustment processing is completed.
· For example, when accuracy of the provisional robot path data is high, the tracing processing is not essential. When the tracing processing is not executed, for example, the inspection target may be inspected while the probe 28a is appropriately pressed against the inspection target in accordance with the provisional robot path data. However, in this case, it is desirable to execute the processing shown in Fig. 4.

### "Regarding Learning Processing"

· In Fig. 6, the teaching points PT1, PT2, and so on configuring the shape learning data are determined by thinning out the points sampled by the processing in S56 in accordance with the curvature of the inspection target which is indicated by a sampling result. However, the present disclosure is not limited thereto. For example, all of the sampled points may be used as the teaching points. Here, the PU 40 may change a sampling interval in accordance with the curvature indicated by the provisional robot path data.
· It is not essential that the learning processing includes processing for generating the shape learning data. For example, the processing may be processing for generating data including only components of three coordinate axes at each position traced by the tracing processing in the inspection targets.

### "Regarding Three-Dimensional Data Getting Processing"

· In the processing in S32, the components of respective coordinate axes of the x-axis, the y-axis, and the z-axis and rotation angles w, p, and r relating to the respective coordinate axes are gotten. However, the present disclosure is not limited thereto. For example, any three Euler angles may be gotten.
· In the processing in S32, the components of the respective coordinate axes of the x-axis, the y-axis, and the z-axis of the three representative points and the rotation angles w, p, and r relating to the respective coordinate axes are gotten. However, the present disclosure is not limited thereto. For example, the components of the respective coordinate axes of the x-axis, the y-axis, and the z-axis in each of two or four or more representative points and the rotation angles w, p, and r relating to the respective coordinate axes may be gotten. In addition, the components of the respective coordinate axes of the x-axis, the y-axis, and the z-axis of a single representative point and the rotation angles w, p, and r relating to the respective coordinate axes may be gotten.

### "Regarding Adjustment Processing"

· The adjustment processing is not limited to processing for setting a position obtained by shifting any one of the representative points by the vector Vn as the predetermined position UF. For example, in the processing shown in Fig. 10, the PU 52 may calculate a center of gravity G of the representative points P1 to P3, and may set the vector Vn that proceeds from the center of gravity G to the predetermined position UF. In this case, in the processing shown in Fig. 11, the PU 42 may calculate a center of gravity G' by using the representative points P1' to P3'. The PU 42 may set a position obtained by shifting the center of gravity G' by the vector Vn as the predetermined position UF'.
· The adjustment processing is not limited to the processing in which the PU 52 uses the vector Vn. For example, a predetermined point calculated from the representative points may be set to the predetermined position UF. Here, for example, the predetermined point can be a center of gravity. In this case, the PU 42 may calculate the predetermined position UF' as the center of gravity G' of the representative points P1' to P3' instead of the processing shown in Fig. 11.

### "Regarding Reference Coordinate System"

· In the above-described embodiment, the PU 52 of the terminal 50 sets the reference coordinate system or determines the vector Vn that proceeds from the representative point P1 to the predetermined position UF while simulating the robot arm 26 and the inspection target. However, the present disclosure is not limited thereto. For example, one actual inspection target may be prepared, and the vector Vn that proceeds from the representative point P1 to the predetermined position UF may be determined while the actual camera 30 images the prepared inspection target.

### "Regarding Adjustment Processing"

· The processing in S36 and S38 may be deleted from the processing shown in Fig. 4.
· It is not essential to execute the adjustment processing.

### "Regarding Probe"

· In the above-described embodiment, a probe used for a reflection method has been described as an example. However, the present disclosure is not limited thereto. For example, a probe used for a transmission method may be used. In this case, the above-described processing may be executed separately for each of the probe that transmits the ultrasonic wave and the probe that receives the ultrasonic wave transmitted through the inspection target. This configuration can be realized by separately providing the robot arm 26 for each of the probe that transmits the ultrasonic wave and the probe that receives the ultrasonic wave transmitted through the inspection target. In this case, the provisional robot path data generated by the processing in S12 is separate data for the probe that transmits the ultrasonic wave and the probe that receives the ultrasonic wave transmitted through the inspection target. In addition, in the processing in S84 in Fig. 8, the probe that transmits the ultrasonic wave and the probe that receives the ultrasonic wave transmitted through the inspection target are linked with each other.

### "Regarding Control Device"

· The control device 40 is not limited to a device including the PU 42 and the storage device 44 to execute software processing. For example, a dedicated hardware circuit (for example, an ASIC or the like) for executing at least a portion of the processing executed in the above-described embodiment may be provided. That is, the control device may include any one of processing circuits (a) to (c) below. (a) Processing circuit including processing device that executes all of the above-described processing in accordance with a program, and a program storage device such as a ROM that stores the program. (b) Processing circuit including a processing device and a program storage device which execute a portion of the above-described processing in accordance with a program, and a dedicated hardware circuit which executes remaining processing. (c) Processing circuit including a dedicated hardware circuit which executes all of the above-described processing. Here, a plurality of the software processing circuits including the processing device and the program storage devices or the dedicated hardware circuits may be provided. That is, the above-described processing may be executed by the processing circuit including at least one from one or a plurality of software processing circuits and one or a plurality of dedicated hardware circuits.

### <Additional Notes>

Solution 1: There is provided a control device of a flaw detection device including a probe and a robot arm that presses the probe against an inspection target. The flaw detection device is a control target of the control device. The control device is configured to execute tracing processing, learning processing, and inspection processing. The tracing processing is processing for moving the probe along the inspection target while bringing the probe into contact with the inspection target by operating the robot arm. The learning processing is processing for learning a shape of the inspection target in accordance with a position of the probe each time the probe is moved by the tracing processing. The inspection processing is processing for inspecting the inspection target by using a reflected wave of a transmitted ultrasonic wave while displacing the probe brought into contact with the inspection target in accordance with the shape of the inspection target which is learned by the learning processing.

**In** the above-described configuration, the shape of the inspection target is learned in accordance with the position of the probe each time the probe is moved by the tracing processing. The inspection is performed by using the reflected wave of the transmitted ultrasonic wave from the probe while the probe is displaced in accordance with the learned shape of the inspection target. In this manner, even when there is a deviation between specifications of the inspection target and an actual shape of the inspection target due to a tolerance of the inspection target, the probe can be brought into contact with the inspection target while the actual shape of the inspection target is highly accurately recognized. Therefore, the inspection using the probe can be highly accurately performed.

Solution 2: In the control device of a flaw detection device according to Solution 1, the learning processing is processing for generating shape learning data by learning the shape of the inspection target. The shape learning data is data indicating coordinates of a surface of the inspection target which relate to a teaching point assigned to each of a plurality of positions of the inspection target and a direction orthogonal to the surface.

**In** the above-described configuration, the direction orthogonal to the surface of the inspection target can be recognized at each position of the inspection target by using the shape learning data. Therefore, it is easy to recognize to use any direction in which the probe needs to be pressed at each position of the inspection target.

Solution 3: In the control device of a flaw detection device according to Solution 2, the learning processing includes interval varying processing for changing an interval between adjacent teaching points in accordance with a curvature of the inspection target is large on a robot path through which the probe passes, under a condition that the interval between the adjacent teaching points when the curvature is equal to or smaller than the interval when the curvature is small.

When the curvature of the inspection target is large, compared to when the curvature of the inspection target is small, the direction orthogonal to the surface of the inspection target is greatly changed at each position of the inspection target. Therefore, when the curvature is large at an appropriate interval between the teaching points when the curvature is small, there is a possibility of insufficient information on using any direction in which the probe is pressed against the inspection target. Therefore, in the above-described configuration, the interval varying processing is executed. In this manner, while an appropriate number of the teaching points is secured to sufficiently obtain information on using any direction in which the probe is pressed against the inspection target, it is possible to suppress an excessive increase in the number of the teaching points.

Solution 4: In the control device of a flaw detection device according to any one of Solutions 1 to 3, the tracing processing is processing for displacing the probe along the inspection target while bringing the probe into contact with the inspection target in accordance with provisional robot path data. The provisional robot path data is data that defines a robot path for moving the probe along the inspection target while bringing the probe into contact with the inspection target in a predetermined coordinate system. The control device is configured to execute three-dimensional data getting processing and adjustment processing. The three-dimensional data getting processing is processing for getting data indicating information on a position and an angle which relate to the inspection target corresponding to an image of the inspection target. The adjustment processing includes alignment processing for aligning the predetermined coordinate system with the inspection target by using the information on the position and the angle as an input. The provisional robot path data that is an input of the tracing processing is the provisional robot path data in which the predetermined coordinate system is aligned with the inspection target by the adjustment processing.

When a relative positional relationship between the flaw detection device and the inspection target is slightly deviated from an assumed relationship, there is a possibility that the predetermined coordinate system indicated by the provisional robot path data is not aligned with the inspection target. Therefore, in the above-described configuration, the information on the position and the angle which relate to the inspection target corresponding to the image of the inspection target is gotten. The predetermined coordinate system is aligned with the inspection target, based on the information on the positions and the angle. In this manner, the probe can be displaced along a robot path intended by the provisional robot path data.

Solution 5: There is provided the control device of a flaw detection device including a probe, and a robot arm that presses the probe against an inspection target. The flaw detection device is a control target of the control device. The control device is configured to execute displacement processing, three-dimensional data getting processing, and adjustment processing. The displacement processing is processing for displacing the probe along the inspection target while bringing the probe into contact with the inspection target in accordance with robot path data. The robot path data is data that defines a robot path for displacing the probe along the inspection target while bringing the probe into contact with the inspection target in a predetermined coordinate system. The three-dimensional data getting processing is processing for getting data indicating information on a position and an angle which relate to the inspection target corresponding to an image of the inspection target. The adjustment processing includes alignment processing for aligning the predetermined coordinate system with the inspection target by using the information on the position and the angle as an input. The robot path data that is an input of the displacement processing is the robot path data in which the predetermined coordinate system is aligned with the inspection target by the adjustment processing.

When the relative positional relationship between the flaw detection device and the inspection target is slightly deviated from the assumed relationship, there is a possibility that the predetermined coordinate system indicated by the robot path data is not aligned with the inspection target. Therefore, in the above-described configuration, the information on the position and the angle which relate to the inspection target corresponding to the image of the inspection target is gotten. The predetermined coordinate system is aligned with the inspection target, based on the information on the positions and the angle. In this manner, the probe can be displaced along the robot path intended by the robot path data.

Solution 6: In the control device of a flaw detection device according to Solution 4 or 5, the three-dimensional data getting processing is processing for getting data indicating the position and the angle which relate to a plurality of predetermined objects of the inspection target. The alignment processing is processing for aligning the predetermined coordinate system with the inspection target by using the information on the position and the angle which relate to the plurality of predetermined objects as an input.

The position and the angle of the predetermined object include information for aligning the predetermined coordinate system with the inspection target. However, as the inspection target is larger, when the predetermined coordinate system and the inspection target are aligned with each other by using the position and the angle which are obtained from a single object, accuracy of the alignment is likely to be degraded. Therefore, in the above-described configuration, the predetermined coordinate system is aligned with the inspection target by using information relating to the position and the angle of each of the plurality of predetermined objects.

Solution 7: In the control device of a flaw detection device according to solution 6, the alignment processing includes processing for shifting an origin of the predetermined coordinate system to a point obtained by displacing a merging point by a vector connecting a representative point for merging and the origin of the predetermined coordinate system. The representative point for merging is a point corresponding to one of the plurality of predetermined objects. The merging point is a point at which the information on the position and the angle which relate to the plurality of predetermined objects is reflected on the representative point for merging.

A vector connecting the representative point for merging corresponding to one of the predetermined objects and the origin can be appropriately set independently of an actual inspection target. Since the merging point on which the position and the angle of the actual inspection target are reflected is shifted by this vector, it is possible to specify a correct origin of the predetermined coordinate system with respect to the actual inspection target.

Solution 8: In the control device of a flaw detection device according to any one of Solutions 4 to 7, the adjustment processing includes getting processing for confirmation, determination processing, and retry processing. The getting processing for confirmation is processing for getting information on a position and an angle which relate to a confirmation object corresponding to an image of the confirmation object of the inspection target. The determination processing is processing for determining whether or not the position and the angle which relate to the confirmation object and the predetermined coordinate system aligned by the alignment processing are aligned with each other. The retry processing is processing for executing the three-dimensional data getting processing and the alignment processing again when it is determined by the determination processing that the position and the angle are not aligned with the predetermined coordinate system.

**In** the above-described configuration, after the alignment processing is performed, it is determined whether or not the aligned predetermined coordinate system is aligned with the position and the angle of the confirmation object. When it is determined that the predetermined coordinate system is not aligned with the position and the angle of the confirmation object, the retry processing is executed. In this manner, the predetermined coordinate system can be reliably aligned with the inspection target.

Solution 9: There is provided a quality management support method including a step of storing the shape learning data relating to a plurality of the inspection targets which is generated by the learning processing executed by the control device of a flaw detection device according to any one of Solutions 2 to 8, and a step of feeding back the shape learning data relating to the plurality of stored inspection targets to a manufacturing step of the inspection targets.

The shape learning data includes information on a tolerance of the inspection target. Therefore, in the above-described method, the shape learning data of the plurality of inspection targets is fed back to the manufacturing step of the inspection target. **In** this manner, validity of the manufacturing step of the inspection target can be examined.

## Claims

1. A control device of a flaw detection device including a probe, and a robot arm that presses the probe against an inspection target,
wherein the flaw detection device is a control target of the control device,
the control device is configured to execute tracing processing, learning processing, and inspection processing,
the tracing processing is processing for moving the probe along the inspection target while bringing the probe into contact with the inspection target by operating the robot arm,
the learning processing is processing for learning a shape of the inspection target in accordance with a position of the probe each time the probe is moved by the tracing processing, and
the inspection processing is processing for inspecting the inspection target by using a reflected wave of a transmitted ultrasonic wave while displacing the probe brought into contact with the inspection target in accordance with the shape of the inspection target which is learned by the learning processing.

2. The control device of a flaw detection device according to Claim 1,
wherein the learning processing is processing for generating shape learning data by learning the shape of the inspection target, and
the shape learning data is data indicating coordinates of a surface of the inspection target which relate to a teaching point assigned to each of a plurality of positions of the inspection target and a direction orthogonal to the surface.

3. The control device of a flaw detection device according to Claim 2,
wherein the learning processing includes interval varying processing for changing an interval between adjacent teaching points in accordance with a curvature of the inspection target on a robot path through which the probe passes, under a condition that the interval between the adjacent teaching points when the curvature is equal to or smaller than the interval when the curvature is small.

4. The control device of a flaw detection device according to Claim 1,
wherein the tracing processing is processing for displacing the probe along the inspection target while bringing the probe into contact with the inspection target in accordance with provisional robot path data,
the provisional robot path data is data that defines a robot path for moving the probe along the inspection target while bringing the probe into contact with the inspection target in a predetermined coordinate system,
the control device is configured to execute three-dimensional data getting processing and adjustment processing,
the three-dimensional data getting processing is processing for getting data indicating information on a position and an angle which relate to the inspection target corresponding to an image of the inspection target,
the adjustment processing includes alignment processing for aligning the predetermined coordinate system with the inspection target by using the information on the position and the angle as an input, and
the provisional robot path data that is an input of the tracing processing is the provisional robot path data in which the predetermined coordinate system is aligned with the inspection target by the adjustment processing.

5. A control device of a flaw detection device including a probe, and a robot arm that presses the probe against an inspection target,
wherein the flaw detection device is a control target of the control device,
the control device is configured to execute displacement processing, three-dimensional data getting processing, and adjustment processing,
the displacement processing is processing for displacing the probe along the inspection target while bringing the probe into contact with the inspection target in accordance with robot path data,
the robot path data is data that defines a robot path for displacing the probe along the inspection target while bringing the probe into contact with the inspection target in a predetermined coordinate system,
the three-dimensional data getting processing is processing for getting data indicating information on a position and an angle which relate to the inspection target corresponding to an image of the inspection target,
the adjustment processing includes alignment processing for aligning the predetermined coordinate system with the inspection target by using the information on the position and the angle as an input, and
the robot path data that is an input of the displacement processing is the robot path data in which the predetermined coordinate system is aligned with the inspection target by the adjustment processing.

6. The control device of a flaw detection device according to Claim 4 or 5,
wherein the three-dimensional data getting processing is processing for getting data indicating the position and the angle which relate to a plurality of predetermined objects of the inspection target, and
the alignment processing is processing for aligning the predetermined coordinate system with the inspection target by using the information on the position and the angle which relate to the plurality of predetermined objects as an input.

7. The control device of a flaw detection device according to Claim 6,
wherein the alignment processing includes processing for shifting an origin of the predetermined coordinate system to a point obtained by displacing a merging point by a vector connecting a representative point for merging and the origin of the predetermined coordinate system,
the representative point for merging is a point corresponding to one of the plurality of predetermined objects, and
the merging point is a point at which the information on the position and the angle which relate to the plurality of predetermined objects is reflected on the representative point for merging.

8. The control device of a flaw detection device according to Claim 4,
wherein the adjustment processing includes getting processing for confirmation, determination processing, and retry processing,
the getting processing for confirmation is processing for getting information on a position and an angle which relate to a confirmation object corresponding to an image of the confirmation object of the inspection target,
the determination processing is processing for determining whether or not the position and the angle which relate to the confirmation object and the predetermined coordinate system aligned by the alignment processing are aligned with each other, and
the retry processing is processing for executing the three-dimensional data getting processing and the alignment processing again when it is determined by the determination processing that the position and the angle are not aligned with the predetermined coordinate system.

9. A quality management support method comprising:
a step of storing the shape learning data relating to a plurality of the inspection targets which is generated by the learning processing executed by the control device of a flaw detection device according to Claim 2; and
a step of feeding back the shape learning data relating to the plurality of stored inspection targets to a manufacturing step of the inspection targets.
